# EUROPEAN PATENT APPLICATION

(11) **EP 3 741 782 A1**
(43) Date of publication of application: **25.11.2020**
(21) Application number: 19741960.9
(22) Date of filing: 11.01.2019
(51) Int. Cl.: C08F 8/20, C08F 210/02, C08J 7/04, C09D 123/28, C09J 123/28

(54) **CHLORINATED POLYOLEFIN RESIN AND USE THEREOF**

(30) Priority: 16.01.2018 JP 2018005205
(71) Applicant: Nippon Paper Industries Co., Ltd., Tokyo 114-0002 (JP)
(72) Inventor: CHEN, Yiwen, Tokyo 114-0002 (JP); FUJIMOTO, Kota, Tokyo 114-0002 (JP); TAKENAKA, Takato, Tokyo 114-0002 (JP); TANAKA, Masanori, Tokyo 114-0002 (JP); MURAOKA, Eriko, Tokyo 114-0002 (JP); YADA, Minoru, Tokyo 114-0002 (JP); KOMOTO, Naosuke, Tokyo 114-0002 (JP)
(74) Representative: Müller-Boré & Partner Patentanwälte PartG mbB
(86) International application number: PCT/JP2019/000784
(87) International publication number: WO 2019/142749

(57) **Abstract**

An object is to provide a chlorinated polyolefin resin that has excellent solution stability and excellent adhesion to polyolefin substrates including a polyethylene substrate. The chlorinated polyolefin resin is a chlorinated product of a copolymer having a structural unit derived from ethylene, in which a content ratio of the ethylene structural unit in the copolymer is 50 mol% to 90 mol%.

## Description

### Field

The present invention relates to a chlorinated polyolefin resin and the use thereof.

### Background

Polyolefins such as polypropylene and polyethylene are inexpensive and have many excellent properties such as moldability, chemical resistance, water resistance, and electrical properties. Therefore, the polyolefins are widely used as sheets, films, molded articles, and the like. Polyolefin substrates, however, are nonpolar and crystalline different from polar substrates such as polyurethane resins, polyamide resins, acrylic resins, and polyester resins. Therefore, the polyolefin substrates have the disadvantage of being difficult to paint and adhere.

As surface treatment techniques for improving painting and adhesion of the polyolefin substrates, mechanical treatment such as corona treatment and plasma treatment and chemical treatment using a primer or the like are carried out. Among them, the primer treatment method is widely employed from the viewpoint of the physical properties of a coated film, workability, and an apparatus.

Modified polyolefins such as chlorinated polyolefins and acid-modified polyolefins are generally used as primers for the polyolefin substrates due to excellent adhesion to the substrates (refer to, for example, Patent Literatures 1 and 2).

### Citation List

### Patent Literature

Patent Literature 1: Japanese Patent Application Laid-open No. 2001-279048
Patent Literature 2: Japanese Patent Application Laid-open No. 2002-187922

### Summary

### Technical Problem

However, a chlorinated polyolefin resin mainly composed of a polypropylene resin is inferior in adhesion to the polyolefin substrates, in particular a polyethylene substrate and thus improvement has been desired.

An object of the present invention is to provide a chlorinated polyolefin resin that has excellent solution stability and excellent adhesion to the polyolefin substrates including the polyethylene substrate.

### Solution to Problem

As a result of intensive studies on the above problems, the inventors of the present invention have found that the above-described problems can be solved by increasing the ratio of a structural unit derived from polyethylene in the resin composition of a polyolefin resin and thus the present invention has been completed.

Namely, the inventors of the present invention provide the following [1] to [12]:
[1] A chlorinated polyolefin resin that is a chlorinated product of a copolymer comprising a structural unit derived from ethylene, wherein a content ratio of the ethylene structural unit in the copolymer is 50 mol% to 90 mol%.
[2] The chlorinated polyolefin resin according to [1], wherein the chlorinated polyolefin resin has a chlorine content ratio of 10% to 40%.
[3] The chlorinated polyolefin resin according to [1] or [2], wherein the copolymer comprises at least one structural unit selected from the group consisting of a structural unit derived from octene, a structural unit derived from butene, a structural unit derived from propylene, a structural unit derived from pentene, a structural unit derived from hexene, a structural unit derived from heptene, a structural unit derived from styrene, a structural unit derived from cyclopentene, and a structural unit derived from norbornene.
[4] The chlorinated polyolefin resin according to any one of [1] to [3], wherein the chlorinated polyolefin resin has a weight average molecular weight of 3,000 to 250,000.
[5] The chlorinated polyolefin resin according to any one of [1] to [4], wherein the copolymer has a melting point (Tm) of 40°C to 140°C.
[6] The chlorinated polyolefin resin according to any one of [1] to [5], wherein the chlorinated polyolefin resin has a softening point of 15°C to 100°C.
[7] A primer composition comprising the chlorinated polyolefin resin according to any one of [1] to [6].
[8] A paint composition comprising the chlorinated polyolefin resin according to any one of [1] to [6].
[9] An ink composition comprising the chlorinated polyolefin resin according to any one of [1] to [6].
[10] An adhesive composition comprising the chlorinated polyolefin resin according to any one of [1] to [6].
[11] A laminated product comprising: a polyethylene film layer; and a layer comprising the chlorinated polyolefin resin according to any one of [1] to [6].
[12] A laminated product comprising: a polypropylene film layer; and a layer comprising the chlorinated polyolefin resin according to any one of [1] to [6].

### Advantageous Effects of Invention

According to the present invention, the chlorinated polyolefin resin that has excellent solution stability and excellent adhesion to the polyolefin substrates including the polyethylene substrate can be provided.

### Description of Embodiments

Hereinafter, the present invention will be described in detail in line with its preferable embodiments.

### [1. Chlorinated polyolefin resin]

The chlorinated polyolefin resin according to the present invention is the chlorinated product of a copolymer having a structural unit derived from ethylene.

In the case where a polyolefin resin is used for applications such as a primer, a paint, an ink, and an adhesive, the polyolefin resin is required to be applied uniformly in order to eliminate coating unevenness. Therefore, the polyolefin resin preferably has excellent solution stability such as uniform dissolution of the resin into a solvent and no precipitation of the resin over time. Although an increase in a chlorine content ratio is necessary for maintaining the solution stability, the increase in the chlorine content ratio results in poor adhesion to the substrate and thus the properties for the above applications are insufficient.

The chlorinated polyolefin resin according to the present invention is obtained by chlorinating the predetermined copolymer described below, and the inventors of the present invention have found that the chlorinated polyolefin resin according to the present invention can maintain the adhesion to the substrate even when the chlorine content ratio is increased, and is applicable to the above-described applications, and thus have accomplished the present invention.

The lower limit of the chlorine content ratio of the chlorinated polyolefin resin is preferably 10% or more, more preferably 12% or more, and further preferably 14% or more. The chlorinated polyolefin resin having a chlorine content ratio of 10% or more provides excellent solution stability. The upper limit of the chlorine content ratio is preferably 40% or less, more preferably 38% or less, and further preferably 35% or less. The chlorinated polyolefin resin having a chlorine content ratio of 40% or less provides excellent adhesion to the polyolefin substrates including the polyethylene substrate.

As one embodiment, the chlorine content ratio of the chlorinated polyolefin resin is preferably 10% to 40%, more preferably 12% to 38%, and further preferably 14% to 35%.

The chlorine content ratio can be measured in accordance with JIS-K7229 (1995).

The lower limit of the weight average molecular weight of the chlorinated polyolefin resin is preferably 3,000 or more, more preferably 10,000 or more, and further preferably 30,000 or more. The chlorinated polyolefin having a weight average molecular weight of less than 3,000 may exhibit insufficient adhesion to the substrate due to the insufficient cohesion of the resin. The upper limit of the weight average molecular weight is preferably 250,000 or less, more preferably 200,000 or less, and further preferably 180,000 or less. The chlorinated polyolefin having a weight average molecular weight of more than 250,000 may cause poor compatibility with other resins and poor solubility in a solvent and thus may be difficult to be applied for paints and inks.

As one embodiment, the weight average molecular weight of the chlorinated polyolefin resin is preferably 3,000 to 250,000, more preferably 10,000 to 200,000, and further preferably 30,000 to 180,000.

The weight average molecular weight can be determined from a standard polystyrene calibration curve obtained by a gel permeation chromatography (GPC) method.

The lower limit of the degree of dispersion (weight average molecular weight/number average molecular weight) of the chlorinated polyolefin resin is preferably 1.8 or more, more preferably 1.9 or more, and further preferably 2.0 or more. The upper limit of the degree of dispersion is preferably 2.9 or less, more preferably 2.7 or less, and further preferably 2.5 or less.

As one embodiment, the degree of dispersion of the chlorinated polyolefin resin is preferably 1.8 to 2.9, more preferably 1.9 to 2.7, and further preferably 2.0 to 2.5.

Metallocene catalysts have high polymerization activity. Therefore, extremely highly active polymerization reaction using the metallocene catalyst for ethylene allows the molecular weight distribution of the produced copolymer of polyethylene and α-olefin to be narrow and a copolymer having long chain branches to be generated. Therefore, the chlorinated polyolefin resin is excellent in solution stability.

The chlorinated polyolefin resin is generally an amorphous polymer and the melting point (Tm) measured by a differential scanning calorimeter (DSC) cannot be defined. Therefore, the state change of the chlorinated polyolefin resin due to temperature change is defined as a visual softening point. The lower limit of the softening point of the chlorinated polyolefin resin according to the present invention is preferably 15°C or more, more preferably 20°C or more, and further preferably 30°C or more. The upper limit of the softening point is preferably 100°C or less, more preferably 95°C or less, and further preferably 90°C or less.

As one embodiment, the softening point of the chlorinated polyolefin resin is preferably 15°C to 100°C, more preferably 20°C to 95°C, and further preferably 30°C to 90°C.

The visual softening point can be measured by using a commercially available melting point measuring instrument (for example, MP-500P softening point measuring apparatus (manufactured by Yanaco Co., Ltd.)).

### [Copolymer]

The copolymer has a structural unit derived from ethylene. The ethylene structural unit content ratio in the copolymer is 50 mol% to 90 mol%. The copolymer having an ethylene structural unit content ratio of less than 90 mol% allows the copolymer having the high content ratio of ethylene to prevent ethylene from recombining with each other during the modification reaction at the time of polyethylene modification and the deterioration in the solubility to be reduced. The copolymer having an ethylene structural unit content ratio of 50 mol% or more provides excellent adhesion of the obtained chlorinated polyolefin resin to the polyolefin substrates including the polyethylene substrate.

The copolymer has a structural unit other than the structural unit derived from ethylene (hereinafter referred to as "the other structural unit"). Examples of the other structural unit include a structural unit derived from octene, a structural unit derived from butene, a structural unit derived from propylene, a structural unit derived from pentene, a structural unit derived from hexene, a structural unit derived from heptene, a structural unit derived from styrene, a structural unit derived from cyclopentene, and a structural unit derived from norbornene.

The copolymer preferably has at least one structural unit selected from the group consisting of the structural unit derived from octene, the structural unit derived from butene, the structural unit derived from propylene, the structural unit derived from pentene, the structural unit derived from hexene, the structural unit derived from heptene, a structural units derived from styrene, a structural unit derived from cyclopentene, and a structural unit derived from norbornene.

As the copolymer, a prepared product may be used or a commercially available product may be used. In the case of preparation, the product may be prepared by a conventionally known method using a catalyst such as the metallocene catalyst. As the commercially available product, a commercially available product derived from a petroleum resource may be used or a commercially available product derived from biomass may be used. Examples of the commercially available products derived from the petroleum resources include "Kernel (registered trademark)", "Novatec (registered trademark)" (these products are manufactured by Japan Polyethylene Corporation), "Tafmer (registered trademark)", "EXCELEX (registered trademark)" (these products are manufactured by Mitsubishi Chemical Corporation), and "UMERIT (registered trademark)" (manufactured by Ube Maruzen-Polyethylene Co., Ltd.). Examples of the commercially available product derived from the biomass include Green Polyethylene (manufactured by Braskem S.A.).

The ethylene structural unit content ratio in the copolymer is 50 mol% to 90 mol%. The lower limit of the ethylene structural unit content ratio of the copolymer is 50 mol% or more, preferably 55 mol% or more, and more preferably 60 mol% or more. The copolymer having an ethylene structural unit content ratio of 50 mol% or more provides excellent adhesion of the obtained chlorinated polyolefin resin to the polyolefin substrates including the polyethylene substrate. The copolymer having an ethylene structural unit content ratio of 90 mol% or less provides excellent solution stability.

As one embodiment, the ethylene structural unit content ratio in the copolymer is 50 mol% to 90 mol%, preferably 55 mol% to 90 mol%, and more preferably 60 mol% to 90 mol%.

The content ratio of the other structural unit in the copolymer is 10 mol% to 50 mol%. The upper limit of the content ratio of the other structural unit in the copolymer is 50 mol% or less, preferably 45 mol% or less, and more preferably 40 mol% or less. The copolymer having a content ratio of the other structural unit of 50 mol% or less provides excellent adhesion of the obtained chlorinated polyolefin resin to the polyolefin substrates including the polyethylene substrate. The copolymer having a content ratio of the other structural unit of 10 mol% or more provides excellent solution stability.

As one embodiment, the content ratio of the other structural unit of the copolymer is 10 mol% to 50 mol%, preferably 10 mol% to 45 mol%, and more preferably 10 mol% to 40 mol%.

The content ratio of each structural unit in the copolymer can be determined from the amount of monomers to be used for the preparation of the copolymer or can be determined by analyzing the copolymer using an apparatus such as NMR. In the case of the commercially available product, the content ratio may be determined based on the product information.

The lower limit of the melting point (Tm) of the copolymer is preferably 35°C or more, more preferably 40°C or more, further preferably 45°C or more, and further more preferably 55°C or more. The copolymer having a Tm of 35°C or more allows the sufficient coating film strength to be exhibited and the sufficient adhesion to the substrate to be exhibited when the chlorinated polyolefin resin is used for applications such as inks and paints. In addition, the chlorinated polyolefin resin allows the blocking during printing to be reduced when the chlorinated polyolefin resin is used as the inks. The upper limit of Tm is preferably 140°C or less, more preferably 120°C or less, further preferably 105°C or less, and further more preferably 100°C or less or 95°C or less. The copolymer having a Tm of 140°C or less allows excessive hardness of the coating film to be reduced and appropriate softness of the coating film to be exhibited when the chlorinated polyolefin is used for the applications such as the inks and paints.

As one embodiment, the melting point (Tm) of the copolymer is preferably 35°C to 140°C, more preferably 40°C to 120°C, further preferably 45°C to 105°C, and further more preferably 55°C to 100°C or 55°C to 95°C.

For the measurement of Tm, DSC measurement apparatus (manufactured by Seiko Instruments Inc.) may be used. Tm can be determined as a melting peak temperature at the time of the melting after the following series of processing: about 10 mg of a sample is melted at 200°C for 10 minutes and thereafter crystallized by cooling to -50°C at a rate of 10 °C/min, and thereafter the temperature is raised to 200°C at 10 °C/min to melt the sample.

### [Chlorination]

The method of chlorination is not particularly limited and known methods can be used. Examples of the method include a method of dissolving the copolymer in a chlorinated solvent such as chloroform, and thereafter blowing chlorine gas into the resultant solution to introduce chlorine. More specifically, the chlorination can be carried out by dispersing or dissolving the copolymer in a medium such as water, carbon tetrachloride, or chloroform, and blowing chlorine gas in a temperature range of 50 °C to 140°C under pressurization or normal pressure in the presence of a catalyst or under irradiation with ultraviolet light.

In the case where the chlorinated solvent is used in the production of the chlorinated resin, the chlorinated solvent can usually be distilled off under reduced pressure or the like or can be replaced with another organic solvent.

### [Acid modification]

The chlorinated polyolefin resin of the present invention may be an acid-modified chlorinated polyolefin resin into which an α,β-unsaturated carboxylic acid and/or a derivative thereof is introduced. Examples of the α,β-unsaturated carboxylic acid and the derivative thereof include maleic acid, maleic anhydride, fumaric acid, citraconic acid, citraconic anhydride, mesaconic acid, itaconic acid, itaconic anhydride, aconitic acid, aconitic anhydride, himic anhydride, (meth)acrylic acid, and (meth)acrylic acid ester.

The amount of the α,β-unsaturated carboxylic acid and/or the derivative thereof to be introduced is not particularly limited and is preferably 20% by weight or less and more preferably 10% by weight or less relative to 100% by weight of the chlorinated polyolefin resin.

The amount of the α,β-unsaturated carboxylic acid and/or the derivative thereof to be introduced can be measured by known methods such as an alkaline titration method or a Fourier transform infrared spectroscopic method.

### [Resin solution]

The chlorinated polyolefin resin according to the present invention is excellent in solution stability. Therefore, the chlorinated polyolefin resin can be used as a resin solution in which the chlorinated polyolefin resin is dissolved in a solvent.

Examples of the solvent include aromatic solvents such as toluene and xylene; alicyclic hydrocarbon solvents such as cyclohexane and methylcyclohexane; hydrocarbon solvents such as hexane, heptane, and octane; ketone solvents such as acetone, methyl ethyl ketone, and methyl isobutyl ketone; ester solvents such as methyl acetate, ethyl acetate, n-propyl acetate, isopropyl acetate, and n-butyl acetate; and glycol solvents such as ethylene glycol, ethyl cellosolve, and butyl cellosolve. Of these solvents, toluene, methylcyclohexane, ethyl acetate, propyl acetate, and butyl acetate are preferable.

The concentration of the resin solution (the resin solid content concentration) may be appropriately selected depending on the applications. However, the resin solution having an excessively high or excessively low concentration results in impairing coating workability and thus the concentration is preferably set to 5% by weight to 35% by weight.

The chlorinated polyolefin resin according to the present invention preferably includes a stabilizer in order to reduce the elimination of chlorine. As the stabilizer, an epoxy compound is preferable. The epoxy compound is preferably an epoxy compound compatible with the chlorinated polyolefin resin modified with chlorine (B).

Examples of the epoxy compound include an epoxy compound having an epoxy equivalent of about 100 to about 500 and containing one or more epoxy groups in one molecule. More specifically, the following compounds are included:

Epoxidized soybean oil and epoxidized linseed oil prepared by epoxidizing vegetable oils having natural unsaturated groups with peracids such as peracetic acid; epoxidized fatty acid esters epoxidized with unsaturated fatty acids such as oleic acid, tall oil fatty acid, and soybean oil fatty acid; epoxidized alicyclic compounds represented by epoxidized tetrahydrophthalate; monoepoxy compounds prepared by condensing bisphenol A or polyhydric alcohol with epichlorohydrin represented by, for example, bisphenol A glycidyl ether, ethylene glycol glycidyl ether, propylene glycol glycidyl ether, glycerol polyglycidyl ether, sorbitol polyglycidyl ether; butyl glycidyl ether, 2-ethylhexyl glycidyl ether, decyl glycidyl ether, stearyl glycidyl ether, allyl glycidyl ether, phenyl glycidyl ether, sec-butylphenyl glycidyl ether, tert-butylphenyl glycidyl ether, and phenol polyethylene oxide glycidyl ether; metal soaps used as a stabilizer for a polyvinyl chloride resin such as calcium stearate and lead stearate; organometallic compounds such as dibutyltin dilaurate and dibutyl malate; and hydrotalcite compounds.

As the stabilizer, these compounds may be used singly or may be used in combination with 2 or more compounds.

### [2. Primer composition, paint composition, ink composition, and adhesive composition]

The primer composition, the paint composition, the ink composition, and the adhesive composition according to the present invention are compositions in which the above-described chlorinated polyolefin resin is added to a primer, a paint, an ink, an adhesive, and the like. In the primer, the paint, the ink, and the adhesive, the effect of the chlorinated polyolefin resin represented by the solution stability can be effectively exhibited by adding the chlorinated polyolefin resin into the material including the organic solvent. At the time of addition, the chlorinated polyolefin resin may be added or the resin solution may be added.

The primer composition, the paint composition, the ink composition, and the adhesive composition according to the present invention usually include a solvent in addition to the above-described chlorinated polyolefin resin. The chlorinated polyolefin resin is as described above. Examples of the solvent include the solvents described as the resin solution of chlorinated polyolefin resin. The solvents included in the primer composition, the paint composition, the ink composition, and the adhesive composition are represented by the organic solvents added for maintaining the physical properties of the paint and the ink and these solvents may be the same as or different from the solvents in the resin solution.

The primer composition, the paint composition, the ink composition, and the adhesive composition according to the present invention may include other resins usually included in the primer, the paint, the ink, and the adhesive. Examples of other resins include acrylic resins, polyester resins, polyurethane resins, epoxy resins, polyether resins, polycarbonate resins, alkyd resins, vinyl acetate resins, and modified polyolefin resins.

Examples of the acrylic resin include a polymerizable unsaturated monomer having one or more hydroxy groups and one or more polymerizable unsaturated bonds in one molecule and a polymerizable unsaturated monomer copolymerizable with the monomer.

Examples of the polymerizable unsaturated monomer that can be copolymerized with the polymerizable unsaturated monomer having one or more hydroxy groups and one or more polymerizable unsaturated bonds in one molecule are as follows:
Alkyl or cycloalkyl (meth)acrylates such as methyl (meth)acrylate, ethyl (meth)acrylate, n-propyl (meth)acrylate, i-propyl (meth)acrylate, n-butyl (meth)acrylate, i-butyl (meth)acrylate, tert-butyl (meth)acrylate, n-hexyl (meth)acrylate, n-octyl (meth)acrylate, 2-ethylhexyl (meth)acrylate, nonyl (meth)acrylate, tridecyl (meth)acrylate, lauryl (meth)acrylate, stearyl (meth)acrylate, cyclohexyl (meth)acrylate, methylcyclohexyl (meth)acrylate, t-butylcyclohexyl (meth)acrylate, cyclododecyl (meth)acrylate, and tricyclodecanyl (meth)acrylate;
Polymerizable unsaturated monomers having an isobornyl group;
Polymerizable unsaturated monomers having an adamantyl group;
Polymerizable unsaturated monomers having a tricyclodecenyl group;
Aromatic ring-containing polymerizable unsaturated monomers such as styrene, α-methylstyrene, vinyl toluene, and benzyl (meth)acrylate;
Polymerizable unsaturated monomers having an alkoxysilyl group;
Polymerizable unsaturated monomers having a fluorinated alkyl group;
Polymerizable unsaturated monomers having a photopolymerizable functional group such as a maleimide group;
Vinyl compounds such as N-vinyl pyrrolidone, ethylene, butadiene, chloroprene, vinyl propionate, and vinyl acetate; Carboxy group-containing polymerizable unsaturated monomers such as (meth)acrylic acid, maleic acid, crotonic acid, and β-carboxyethyl acrylate;
Nitrogen-containing polymerizable unsaturated monomers such as (meth)acrylonitrile, (meth)acrylamide, N,N-dimethylaminoethyl (meth)acrylate, N,N-diethylaminoethyl (meth)acrylate, N,N-dimethylaminopropyl (meth)acrylamide, methylene bis(meth)acrylamide, ethylene bis(meth)acrylamide, dimethylaminoethyl (meth)acrylate, and adducts of glycidyl (meth)acrylate and amines;
Polymerizable unsaturated monomers having two or more polymerizable unsaturated groups in one molecule such as allyl (meth)acrylate and 1,6-hexanediol di(meth)acrylate;
Epoxy group-containing polymerizable unsaturated monomers such as glycidyl (meth)acrylate, β-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate, and allyl glycidyl ether;
(Meth)acrylates having a polyoxyethylene chain of which molecular terminal is an alkoxy group;
Polymerizable unsaturated monomers having a sulfonic acid group; and derivatives of (meth)acrylic acid including monoester products of (meth)acrylic acid such as 2-hydroxyethyl (meth)acrylate, 2-hydroxypropyl (meth)acrylate, 3-hydroxypropyl (meth)acrylate, and 4-hydroxybutyl (meth)acrylate and a divalent alcohol having a carbon number of 2 to 8, ε-caprolactone-modified products of the monoester products of (meth)acrylic acid and a divalent alcohol having a carbon number of 2 to 8, N-hydroxymethyl (meth)acrylamide, and (meth)acrylates having a polyoxyethylene chain of which molecular terminal is a hydroxy group.

Examples of the polyester resin include a resin produced by the esterification reaction of an acid component and an alcohol component, or transesterification reaction.

As the acid component, a compound that is usually used as an acid component at the time of the production of the polyester resin can be used. Examples of the acid component include aliphatic polybasic acids, alicyclic polybasic acids, and aromatic polybasic acids.

As the alcohol component, polyhydric alcohols can be used. Examples of polyhydric alcohols include the following compounds:
Divalent alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 3-methyl-1,2-butanediol, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecanedimethanol, hydrogenated bisphenol A, and hydrogenated bisphenol F;
Polylactone diols obtained by adding lactones such as ε-caprolactone to the above-described divalent alcohols;
Ester diols such as bis(hydroxyethyl)terephthalate;
Polyether diols such as alkylene oxide adducts of bisphenol A, polyethylene glycol, polypropylene glycol, and polybutylene glycol;
Trivalent or higher valent alcohols such as glycerin, trimethylolethane, trimethylolpropane, diglycerin, triglycerin, 1,2,6-hexanetriol, pentaerythritol, dipentaerythritol, tris(2-hydroxyethyl) isocyanuric acid, sorbitol, and mannitol; and
Polylactone polyols obtained by adding lactones such as ε-caprolactone to these trivalent or higher valent alcohols.

The polyurethane resin is not particularly limited and examples of the polyurethane resin include urethane dispersion produced by the following production methods i to iii.
(Production method i) A production method as follows: reacting a polyfunctional isocyanate compound, a polyol having two or more hydroxy groups in one molecule, and a hydrophilizing agent having both a hydroxy group and a carboxylic acid group such as dimethylolpropanediol and dimethylolbutanediol in the presence of a catalyst such as dibutyltin dilaurate in a state of excessive isocyanate group to form a urethane prepolymer; neutralizing the carboxylic acid in a urethane prepolymer with an organic base such as amines or an inorganic base such as potassium hydroxide or sodium hydroxide; forming an aqueous product by adding ion-exchanged water; and thereafter forming further higher molecular weight product with a chain elongation agent to prepare urethane dispersion.
(Production method ii) A production method of synthesizing a urethane prepolymer having no carboxylic acid, elongating the chain using a diol or diamine having a hydrophilic group such as carboxylic acid, sulfonic acid, or ethylene glycol, neutralizing with the above-described base to form an aqueous product, and forming higher molecular weight product using the chain elongation agent, if necessary, to prepare urethane dispersion.
(Production method iii) A production method of preparing urethane dispersion by combining an emulsifying agent in (Production method i) and (Production method ii), if necessary.

Examples of the polyfunctional isocyanate compounds include diisocyanate compounds such as 1,6-hexane diisocyanate, lysine diisocyanate, isophorone diisocyanate, cyclohexane-1,4-diisocyanate, xylylene diisocyanate, 2,4-tolylene diisocyanate, and 2,6-tolylene diisocyanate; and
polyfunctional isocyanate compounds such as adducts, biurets, and isocyanurates of the diisocyanate compounds.

Examples of the polyol include polyester polyols, polyether polyols, and polycarbonate polyols.

The epoxy resin is an aqueous resin having one or more epoxy groups in the molecule. As the epoxy resin, those known in the art can be used.

Example of the epoxy resin include a resin in which a novolac epoxy resin obtained by adding epichlorohydrin to a phenol novolac resin is forcibly emulsified with an emulsifier; and a resin in which a bisphenol epoxy resin similarly obtained by adding epichlorohydrin to bisphenol is forcibly emulsified with an emulsifier.

The primer composition, the paint composition, the ink composition, and the adhesive composition according to the present invention may include a pigment. The pigment is a powdery solid that does not dissolve in water, oil, solvent, or the like and the pigment itself has color. The pigment is a component that provides the color or the like of paints or inks.

The pigment includes three types of pigments: a coloring pigment, an extender pigment, and a functional pigment. Of these pigments, the coloring pigment is a pigment that determines the color of the paints and the inks. On the other hand, the paint composition according to the present invention is colored (a colored paint) when the paint composition includes a coloring pigment or colorless (a clear paint) when the paint composition does not include the coloring pigment. Both types of the paints may be used.

The coloring pigment include organic pigments and inorganic pigments and both of the pigments may be used. Examples of the organic pigment include azo lake pigments, insoluble azo pigments, condensed azo pigments, phthalocyanine pigments, indigo pigments, perinone pigments, perylene pigments, phthalone pigments, dioxazine pigments, quinacridone pigments, isoindolinone pigments, benzimidazolone pigments, diketopyrrolopyrrole pigments, and metal complex pigments. Examples of the inorganic pigment include yellow iron oxide, red iron oxide, carbon black, and titanium dioxide.

Examples of the functional pigment include flake form pigments made of a cholesteric liquid crystal polymer, aluminum flake pigments, metal oxide-coated alumina flake pigments, metal oxide-coated silica flake pigments, graphite pigments, interference mica pigments, colored mica pigments, titanium metal flake pigments, stainless steel flake pigments, plate-like iron oxide pigments, metal plating glass flake pigments, metal oxide plating glass flake pigments, and hologram pigments.

Examples of the extender pigment include barium sulfate, talc, kaolin, and silicates.

A method for including the pigment into the primer composition, the paint composition, the ink composition, and the adhesive composition is not particularly limited. For example, a state of dispersing the pigment in the composition as pigment paste may be applicable. The pigment paste can usually be prepared by adding the pigment and a resin in a solvent and dispersing the resultant mixture. Alternatively, commercially available pigment pastes may be used. The resin is not particularly limited and examples of the resin include water-soluble resins such as an acryl polyol, a polyester polyol, and a polyacrylic acid. The solvent is not particularly limited and examples of the solvent include organic solvents such as toluene and xylene and water. For the dispersion, an apparatus such as a sand grinder mill is usually used.

The primer composition, the paint composition, the ink composition, and the adhesive composition according to the present invention may include other components, if necessary, in a range not impairing the effects of the present invention. Such a compound is not particularly limited and examples of the compound include surface conditioners, anti-sedimentation agents, matting agents, ultraviolet ray absorbers, light stabilizers, antioxidants, waxes, film-forming assisting agents, crosslinking agents, thickeners, antifoaming agents and, dyes.

### [3. Laminated product]

The laminated product according to the present invention includes a polyethylene film layer or a polypropylene film layer, and a layer including the above-mentioned chlorinated polyolefin resin. The above-described chlorinated polyolefin resin is excellent in adhesion to the polyolefin substrates including the polyethylene substrate and thus adhesion between the film layer and the resin layer can be excellent.

The polyethylene film is not particularly limited. For example, known polyethylene films made of highpressure low-density polyethylene (LDPE), linear short chain-branched polyethylene (LLDPE), medium and low-pressure high-density polyethylene (HDPE), and metallocene catalyzed linear short chain-branched polyethylene (LLDPE) may be used.

Also, the polypropylene film is not particularly limited. For example, known polypropylene films such as a biaxially oriented polypropylene film (OPP) and a non-oriented polypropylene film (CPP) may be used.

### [Example]

Hereinafter, the present invention will be described in detail with reference to Examples. The following Examples are intended to suitably describe the present invention and do not limit the present invention. Unless otherwise separately described, the measuring methods of physical property values and the like are measuring methods described above.

### [Heat seal strength test (gf/15 mm)]

As the heat seal strength test, a 180° peeling strength test was evaluated by overlapping the coated surfaces of the two films to carrying out heat seal under pressure bonding conditions of 50°C-2 kg/cm² or 70°C-2 kg/cm² for 10 seconds and measuring the peeling strength after 24 hours of the heat sealing using Tensilon. The tensile speed was determined to be 50 mm/min.

### [Weight average molecular weight (Mw) and number average molecular weight (Mn)]:

These molecular weights are values measured under the following conditions.
Measuring equipment: HLC-8320GPC (manufactured by Tosoh Corporation)
Eluent: Tetrahydrofuran
Column: TSKgel (manufactured by Tosoh Corporation)

### [Degree of dispersion (Mw/Mn)]

The degree of dispersion was determined from the values of measured Mw and Mn by calculation.

[Structural unit content ratio (%) of each monomer in copolymer]

The structural unit content ratio of each monomer was determined from the ratio of the monomer composition used for polymerization. In the case where the ratio of the monomer composition used for the polymerization was unknown, the ratio was measured using a nuclear magnetic resonance apparatus (NMR) as described below.

About 60 mg of a sample was dissolved in tetrachloroethane (d2), a ¹³C-NMR spectrum was measured under the following conditions, and the structural unit content ratio was calculated from the integral value of the carbon signals of chain methylene.
Observation range: 250 ppm
Measurement mode: Single pulse proton decoupling
Pulse angle: 5.25 µs (45°)
Repeating time: 5.5 seconds
Measurement temperature: 120°C

### [Solution stability]:

To the toluene dispersion of chlorinated polyolefin resin, 4% by weight of Epiol SB (manufactured by NOF Corporation) was added and the resultant mixture was allowed to stand at room temperature for 1 month. The change in liquid properties and appearance of the resultant dispersion were visually observed to evaluate as follows.
A: Light yellow clear solution that is not separated
B: Slightly turbid solution that is not separated
C: Turbid solution that is not separated

### [Melt flow rate (MFR) (g/10 min)]:

In accordance with ASTM D1238, the melt flow rate was determined using a melt flow index tester (manufactured by Yasuda Seiki Seisakusho Ltd.) under conditions of a measurement temperature of 190°C and a measurement load of 2.16 kg.

### [Tm (°C)]:

In accordance with JIS K7121-1987, about 5 mg of a sample was heated and maintained in a heated and melted state at 200°C for 10 minutes using a DSC measurement apparatus (manufactured by Seiko Instruments Inc.), thereafter cooled at a rate of 10 °C/min, and stably maintained at -50°C. Thereafter, the temperature of the sample was further raised to 200°C at 10°C/min and a melting peak temperature at the time of melting was measured. This peak temperature was determined as Tm.

### [Softening point (°C)]:

A sample was prepared in the form of a film using an MP-500P softening point measurement apparatus (manufactured by Yanaco Co., Ltd.). Thereafter, the sample was heated at 5 °C/min and the temperature at which the shape change (melting state) of the sample was visually observed was determined as the softening point temperature.

### [Chlorine content ratio (%)]:

The chlorine content ratio was measured in accordance with JIS-K7229-1995.

### (Example 1)

Into a reaction vessel inside which glass lining was formed, 2 kg of a copolymer of ethylene and octene (ethylene:octene = 90:10)(MFR = 30 g/10min, Tm = 58°C) produced by using a metallocene catalyst as a polymerization catalyst was charged and 37 L of chloroform was added. The copolymer was sufficiently dissolved under a pressure of 2 kg/cm² at a temperature of 110°C. As an initiator, 2 g of t-butylperoxy-2-hexanoate was added. Chlorine gas and oxygen gas were blown at the bottom of the reaction vessel while the pressure in the vessel was being controlled to 2 kg/cm² and the mixture was being irradiated with ultraviolet light to carrying out chlorination. The resultant chlorination product was taken out three times during the chlorination and chloroform serving as a solvent was distilled off with an evaporator. Thereafter, the solvent was replaced with toluene and Epiol SB (made by NOF Corporation) was added as a stabilizer in an amount of 4% by weight relative to the resin to give a chlorinated ethylene-α-olefin copolymer resin solution having a resin concentration of 10% by weight to 15% by weight (the resin solution of chlorinated polyolefin resin). The physical properties of the resin are listed in Table 1. When the obtained resin solution was allowed to stand at room temperature for 1 month, no change was observed in the liquid properties and appearance.

### (Examples 2 and 3)

Resin solutions of chlorinated polyolefin resins were obtained in the same method as the method in Example 1 except that the blowing time of the chlorine gas and oxygen gas was changed and that the chlorine content ratio was changed.

### (Comparative Example 1)

Into a reaction vessel inside which glass lining was formed, 2 kg of ethylene wax (Tm = 108°C) prepared by using a Ziegler-Natta catalyst serving as a polymerization catalyst was charged and 37 L of chloroform was added. The wax was sufficiently dissolved under a pressure of 2 kg/cm² at a temperature of 110°C. As an initiator, 2 g of t-butylperoxy-2-hexanoate was added. Chlorine gas and oxygen gas were blown at the bottom of the reaction vessel while the pressure in the vessel was being controlled to 2 kg/cm² and the mixture was being irradiated with ultraviolet light to carrying out chlorination. The resultant chlorination product was taken out three times during the chlorination and chloroform serving as a solvent was distilled off with an evaporator. Thereafter, the solvent was replaced with toluene and Epiol SB (made by NOF Corporation) was added as a stabilizer in an amount of 4% by weight relative to the resin to give a chlorinated polyethylene resin solution having a resin concentration of 10% by weight to 15% by weight. The physical properties of the resin are listed in Table 1. When the obtained resin solution was allowed to stand at room temperature for 1 month, the liquid properties and appearance provide the results listed in Table 1.

### (Comparative Examples 2 and 3)

Resin solutions of a chlorinated polyethylene resins were obtained in the same method as the method in comparative Example 1 except that the blowing time of the chlorine gas and oxygen gas was changed and that the chlorine content ratio was changed.

### (Example 4)

Into a reaction vessel inside which glass lining was formed, 2 kg of an ethylene-butene copolymer (about 90% of ethylene and about 10% of butene) (MFR = 3.6 g/10min, Tm = 55°C) produced by using a metallocene catalyst as a polymerization catalyst was charged and 37 L of chloroform was added. The copolymer was sufficiently dissolved under a pressure of 2 kg/cm² at a temperature of 110°C. As an initiator, 2 g of t-butylperoxy-2-hexanoate was added. Chlorine gas and oxygen gas were blown at the bottom of the reaction vessel while the pressure in the vessel was being controlled to 2 kg/cm² and the mixture was being irradiated with ultraviolet light to carrying out chlorination. The resultant chlorination product was taken out three times during the chlorination and chloroform serving as a solvent was distilled off with an evaporator. Thereafter, the solvent was replaced with toluene and Epiol SB (made by NOF Corporation) was added as a stabilizer in an amount of 4% by weight relative to the resin to give a chlorinated ethylene-butene copolymer resin solution having a resin concentration of 10% by weight to 15% by weight (the resin solution of chlorinated polyolefin resin). The physical properties of the resin are listed in Table 1. When the obtained resin solution was allowed to stand at room temperature for 1 month, no change was observed in the liquid properties and appearance.

### (Examples 5 and 6)

Resin solutions of a chlorinated polyolefin resins were obtained in the same method as the method in Example 4 except that the blowing time of the chlorine gas and oxygen gas was changed and that the chlorine content ratio was changed.

### (Example 7)

Into a reaction vessel inside which glass lining was formed, 2 kg of an ethylene-butene copolymer (about 70% of ethylene and about 30% of butene) (MFR = 3.6 g/10min, Tm = 55°C) produced by using a metallocene catalyst as a polymerization catalyst was charged and 37 L of chloroform was added. The copolymer was sufficiently dissolved under a pressure of 2 kg/cm² at a temperature of 110°C. As an initiator, 2 g of t-butylperoxy-2-hexanoate was added. Chlorine gas and oxygen gas were blown at the bottom of the reaction vessel while the pressure in the vessel was being controlled to 2 kg/cm² and the mixture was being irradiated with ultraviolet light to carrying out chlorination. The resultant chlorination product was taken out five times during the chlorination and chloroform serving as a solvent was distilled off with an evaporator. Thereafter, the solvent was replaced with toluene and Epiol SB (made by NOF Corporation) was added as a stabilizer in an amount of 4% by weight relative to the resin to give a chlorinated ethylene-butene copolymer resin solution having a resin concentration of 10% by weight to 15% by weight (the resin solution of chlorinated polyolefin resin). The physical properties of the resin are listed in Table 1. When the obtained resin solution was allowed to stand at room temperature for 1 month, no change was observed in the liquid properties and appearance.

### (Examples 8 to 11)

Resin solutions of a chlorinated polyolefin resins were obtained in the same method as the method in Example 7 except that the blowing time of the chlorine gas and oxygen gas was changed and that the chlorine content ratio was changed.

### (Example 12)

Into a reaction vessel inside which glass lining was formed, 2 kg of an ethylene-propylene copolymer (about 90% of ethylene and about 10% of propylene) (MFR = 4.3 g/10min, Tm = 58°C) produced by using a metallocene catalyst as a polymerization catalyst was charged and 37 L of chloroform was added. The copolymer was sufficiently dissolved under a pressure of 2 kg/cm² at a temperature of 110°C. As an initiator, 2 g of t-butylperoxy-2-hexanoate was added. Chlorine gas and oxygen gas were blown at the bottom of the reaction vessel while the pressure in the vessel was being controlled to 2 kg/cm² and the mixture was being irradiated with ultraviolet light to carrying out chlorination. The resultant chlorination product was taken out three times during the chlorination and chloroform serving as a solvent was distilled off with an evaporator. Thereafter, the solvent was replaced with toluene and Epiol SB (made by NOF Corporation) was added as a stabilizer in an amount of 4% by weight relative to the resin to give a chlorinated ethylene-propylene copolymer resin solution having a resin concentration of 10% by weight to 15% by weight (the resin solution of chlorinated polyolefin resin). The physical properties of the resin are listed in Table 1. When the obtained resin solution was allowed to stand at room temperature for 1 month, no change was observed in the liquid properties and appearance.

### (Examples 13 and 14)

Resin solutions of a chlorinated polyolefin resins were obtained in the same method as the method in Example 12 except that the blowing time of the chlorine gas and oxygen gas was appropriately changed and that the chlorine content ratio was changed as listed in Table 1.

### (Example 15)

Into a reaction vessel inside which glass lining was formed, 2 kg of biomass functionalized polyethylene ("LLDPE SLL318", manufactured by Braskem S.A.) (MFR = 2.8 g/10min, Tm = 120°C) serving as an ethylene-butene copolymer (about 87% of ethylene and about 13% of butene) was charged and 37 L of chloroform was added. The biomass functionalized polyethylene was sufficiently dissolved under a pressure of 2 kg/cm² at a temperature of 110°C. As an initiator, 2 g of t-butylperoxy-2-hexanoate was added. Chlorine gas and oxygen gas were blown at the bottom of the reaction vessel while the pressure in the vessel was being controlled to 2 kg/cm² and the mixture was being irradiated with ultraviolet light to carrying out chlorination. The resultant chlorination product was taken out three times during the chlorination and chloroform serving as a solvent was distilled off with an evaporator. Thereafter, the solvent was replaced with toluene and Epiol SB (made by NOF Corporation) was added as a stabilizer in an amount of 4% by weight relative to the resin to give a chlorinated ethylene-butene copolymer resin solution having a resin concentration of 10% by weight to 15% by weight (the resin solution of chlorinated polyolefin resin). The physical properties of the resin are listed in Table 1. When the obtained resin solution was allowed to stand at room temperature for 1 month, no change was observed in the liquid properties and appearance.

**[Table 1]**

| | Monomer | Ratio | Chlorine content ratio (wt%) | Mw | Mn | Mw/ Mn | Softening point (°C) | Solution stability |
|---|---|---|---|---|---|---|---|---|
| Example 1 | Ethylene :octene | 90:10 | 18.4 | 95800 | 45100 | 2.1 | 46-56 | A |
| Example 2 | | | 23.2 | 98700 | 46300 | 2.1 | 45-55 | A |
| Example 3 | | | 28.4 | 100900 | 45600 | 2.2 | 42-52 | A |
| Comparative Example 1 | Ethylene | 100 | 21.3 | 23700 | 8000 | 3.0 | 43-60 | C |
| Comparative Example 2 | | | 26.9 | 24900 | 8200 | 3.0 | 33-43 | B |
| Comparative Example 3 | | | 32.5 | 25300 | 8300 | 3.0 | 31-38 | A |
| Example 4 | Ethylene :butene | 90:10 | 20.4 | 151800 | 76600 | 2.0 | 75-85 | A |
| Example 5 | | | 25.7 | 160600 | 80800 | 2.0 | 72-82 | A |
| Example 6 | | | 30.9 | 173200 | 86800 | 2.0 | 65-80 | A |
| Example 7 | Ethylene :butene | 70:30 | 14.6 | 142400 | 72300 | 2.0 | 35-52 | A |
| Example 8 | | | 17.9 | 148900 | 75600 | 2.0 | 35-53 | A |
| Example 9 | | | 20.7 | 155400 | 77200 | 2.0 | 55-79 | A |
| Example 10 | | | 25.7 | 160600 | 79100 | 2.0 | 57-80 | A |
| Example 11 | | | 30.8 | 176000 | 87800 | 2.0 | 58-80 | A |
| Example 12 | Ethylene :propyle ne | 90:10 | 20.8 | 115800 | 57900 | 2.0 | 47-57 | A |
| Example 13 | | | 26.2 | 116900 | 58500 | 2.0 | 51-65 | A |
| Example 14 | | | 30.8 | 117200 | 58600 | 2.0 | 58-68 | A |
| Example 15 | Ethylene :butene | 87:13 | 29.9 | 107800 | 39000 | 2.8 | 62-95 | A |

From the results listed in Table 1, it is found that the chlorinated products of the copolymers having the ethylene structural unit and the other α-olefin structural unit produced by using the metallocene catalyst serving as the polymerization catalyst (Examples 1 to 14) have excellent liquid properties even when the chlorine content ratios are low.

It is also found that the use of the chlorinated product of the biomass-derived polyethylene copolymer (Example 15) provides the chlorinated product having excellent liquid properties that are the same as the liquid properties of the petroleum resource-derived polyethylene copolymers.

The resin dispersions of the chlorinated polyolefin resins or the chlorinated polyethylene resin solutions prepared in Examples and Comparative Examples were applied to an untreated stretched polypropylene film (hereinafter referred to as "untreated OPP") and each film of linear low density polyethylene (hereinafter referred to as "LLDPE"), low density polyethylene (hereinafter referred to as "LDPE"), or high density polyethylene (hereinafter referred to as "HDPE") using a coating rod #10 and the applied dispersion or solution was dried at room temperature for 24 hours to prepare a coated surface made of the chlorinated polyolefin resin on each of the films. The heat seal strength test was carried out using the coated surface. The results are listed in Table 2.

**[Table 2]**

| Treatment temperature | 50°C | | | | 100°C | | | |
|---|---|---|---|---|---|---|---|---|
| | Type of film | | | | Type of film | | | |
| | Untreated OPP | LLDPE | LDPE | HDPE | Untreated OPP | LLDPE | LDPE | HDPE |
| Example 1 | 218 | 132 | - | 200 | 257 | 192 | 131 | 330 |
| Example 2 | 287 | 162 | 42 | 263 | 326 | 295 | 140 | 418 |
| Example 3 | 133 | 62 | - | 122 | 179 | 82 | - | 229 |
| Comparative Example 1 | - | - | - | - | - | - | - | - |
| Comparative Example 2 | - | - | - | - | - | - | - | - |
| Comparative Example 3 | 46 | 22 | 31 | 40 | 47 | 28 | 30 | 53 |
| Example 4 | 324 | 240 | 19 | 75 | 444 | 489 | 34 | 76 |
| Example 5 | 428 | 218 | 13 | 45 | 481 | 241 | 31 | 80 |
| Example 6 | 149 | 228 | 30 | 90 | 139 | 277 | 31 | 103 |
| Example 7 | 282 | 194 | 27 | 157 | 424 | 293 | 146 | 339 |
| Example 8 | 360 | 246 | 33 | 209 | 468 | 306 | 133 | 358 |
| Example 9 | 919 | 172 | 32 | 133 | 448 | 237 | 78 | 237 |
| Example 10 | 620 | 212 | 12 | 64 | 426 | 241 | 14 | 91 |
| Example 11 | 422 | 61 | 18 | 61 | 396 | 95 | 27 | 40 |
| Example 12 | 326 | 245 | 20 | 80 | 450 | 458 | 38 | 75 |
| Example 13 | 420 | 228 | 33 | 56 | 518 | 243 | 39 | 80 |
| Example 14 | 169 | 255 | 35 | 99 | 220 | 301 | 25 | 112 |
| Example 15 | 150 | 222 | 40 | 101 | 214 | 320 | 30 | 94 |

From the results listed in Table 2, it is found that the chlorinated products (Examples 1 to 14) of the copolymers having the ethylene structural unit and the other α-olefin structural unit produced using a metallocene catalyst serving as the polymerization catalyst have excellent heat seal properties to the polyethylene film and polypropylene film at proper chlorination degree, as compared with the chlorinated product of the polyethylene produced using a conventional Ziegler-Natta catalyst serving as the polymerization catalyst. It is also found that the use of the chlorinated product of the biomass-derived polyethylene copolymer (Example 15) provides excellent heat seal properties that are the same as the heat seal properties of the petroleum resource-derived polyethylene copolymers. From these results, it is found that the chlorinated products of the copolymers having the ethylene structural unit and the other α-olefin structural unit according to the present invention have efficacy for an adhesion imparting agent for the paint, the primer, or the ink or the adhesive.

## Claims

1. A chlorinated polyolefin resin that is a chlorinated product of a copolymer comprising a structural unit derived from ethylene, wherein
a content ratio of the ethylene structural unit in the copolymer is 50 mol% to 90 mol%.

2. The chlorinated polyolefin resin according to claim 1, wherein the chlorinated polyolefin resin has a chlorine content ratio of 10% to 40%.

3. The chlorinated polyolefin resin according to claim 1 or 2, wherein the copolymer comprises at least one structural unit selected from the group consisting of a structural unit derived from octene, a structural unit derived from butene, a structural unit derived from propylene, a structural unit derived from pentene, a structural unit derived from hexene, a structural unit derived from heptene, a structural unit derived from styrene, a structural unit derived from cyclopentene, and a structural unit derived from norbornene.

4. The chlorinated polyolefin resin according to any one of claims 1 to 3, wherein the chlorinated polyolefin resin has a weight average molecular weight of 3,000 to 250,000.

5. The chlorinated polyolefin resin according to any one of claims 1 to 4, wherein the copolymer has a melting point (Tm) of 40°C to 140°C.

6. The chlorinated polyolefin resin according to any one of claims 1 to 5, wherein the chlorinated polyolefin resin has a softening point of 15°C to 100°C.

7. A primer composition comprising the chlorinated polyolefin resin according to any one of claims 1 to 6.

8. A paint composition comprising the chlorinated polyolefin resin according to any one of claims 1 to 6.

9. An ink composition comprising the chlorinated polyolefin resin according to any one of claims 1 to 6.

10. An adhesive composition comprising the chlorinated polyolefin resin according to any one of claims 1 to 6.

11. A laminated product comprising:
a polyethylene film layer; and
a layer comprising the chlorinated polyolefin resin according to any one of claims 1 to 6.

12. A laminated product comprising:
a polypropylene film layer; and
a layer comprising the chlorinated polyolefin resin according to any one of claims 1 to 6.
